# FASCICULE DE BREVET EUROPEEN

(11) **EP 0 924 106 B1**
(45) Date de publication et mention de la délivrance du brevet: **13.03.2002**
(21) Numéro de dépôt: 98403016.3
(22) Date de dépôt: 02.12.1998
(51) Int. Cl.: B44F 9/10

(54) **Procédé pour donner un aspect métallique vieilli à une pièce moulée en matière thermoplastique**
Verfahren zur Herstellung eines thermoplastischen Formkörpers mit gealtertem metallischem Aussehen
Process for providing a thermoplastic moulded article with an aged metallic appearance

(30) Priorité: 17.12.1997 FR 9716018
(43) Date de publication de la demande: 23.06.1999
(73) Titulaire: REXAM COSMETIC CLOSURES, 71290 Simandre (FR)
(72) Inventeur: Dufour, Jean-Claude, 71700 Tournus (FR)
(74) Mandataire: Bertrand, Didier

(56) Documents cités:
- FR-A- 1 548 687
- FR-A- 1 582 484
- FR-A- 2 735 075
- DATABASE WPI Section Ch, Week 8611 Derwent Publications Ltd., London, GB; Class A23, AN 86-071985 XP002075507 & JP 61 021143 A (CALP KOGYO KK)

## Description

La présente invention concerne un procédé pour donner un aspect métallique vieilli à une pièce moulée en thermoplastique.

On utilise beaucoup aujourd'hui, notamment dans l'industrie de l'emballage et des cosmétiques (par exemple pour les bouchons de flacons de parfum), des pièces moulées en matière thermoplastique à aspect métallisé (or, argent, cuivre, bronze, laiton, etc.). L'objectif de la métallisation est d'obtenir un aspect mat ou brillant homogène sur l'ensemble de la pièce traitée. Un procédé classique et efficace de métallisation comporte les étapes d'évaporation d'une très fine couche d'aluminium sur la surface extérieure de la pièce dans une cloche à vide (sublimation de l'aluminium) puis d'application d'une couche de vernis par pulvérisation, cette couche de vernis ayant pour but de protéger la couche d'aluminium déposée par évaporation chimique, mais aussi de donner la teinte voulue (or, argent, etc.) à la métallisation.

Dans le procédé classique, on considère qu'il est essentiel d'avoir, avant métallisation, un état de surface très homogène pour obtenir une métallisation de bonne qualité. Cet état de surface peut résulter d'un polissage poussé de la pièce brute ou bien de l'application d'une première couche de vernis, avant métallisation, permettant d'unifier la surface.

Quoique l'aspect métallique obtenu par ce procédé classique donne pleine satisfaction, le besoin est apparu de pouvoir fabriquer des pièces dont l'aspect soit celui d'un métal naturellement vieilli.

On connaît par le document FR 2 735 075 un procédé pour conférer un aspect métallique patiné à une pièce en matière plastique, qui est métallisée par un dépôt électrolytique de nickel et non par évaporation de métal. De plus, le côté patiné est conféré par une dégradation de la surface, par abrasion, intervenant après le dépôt de nickel.

Par ailleurs, on connaît par le document FR 1 548 687 un autre procédé de vieillissement d'une pièce plastique métallisée, selon lequel on ramollit la surface du plastique et on la strie, par exemple avec une brosse.

Le but de l'invention est de proposer un procédé permettant d'obtenir sur la pièce métallisée des zones d'aspect de surface bien différencié, sans nécessiter une étape de fabrication supplémentaire.

L'invention atteint son but grâce à un procédé comportant les étapes habituelles d'évaporation directe de métal sur la surface extérieure de la pièce puis d'application d'une couche de vernis, caractérisé en ce que, préalablement aux deux dites étapes, on a rendu ladite surface extérieure hétérogène lors du moulage, avec des zones d'aspect bien poli et des zones d'aspect moins poli. Ainsi, le procédé de l'invention va-t-il à l'encontre de la démarche naturelle de l'homme du métier, qui aurait été de partir d'une pièce métallisée classique brillante et d'en transformer l'aspect extérieur, par exemple par application de couches de vernis supplémentaires. Au contraire, le procédé de l'invention intervient en amont de la préparation de la pièce et se substitue à la première application de vernis ou au premier polissage du procédé classique.

Selon un premier mode de réalisation de l'invention, ladite surface extérieure hétérogène est obtenue directement lors du moulage par utilisation d'un moule dont la surface présente des zones bien polies (brillantes) et des zones moins polies (satinées), et on utilise une matière thermoplastique non chargée, notamment un polypropylène non chargé. Dans ce cas, les zones satinées du moule vont créer sur la pièce moulée finale les zones d'aspect métallique vieilli tandis que les zones brillantes créeront des zones d'aspect métallique brillant traditionnel. On peut selon ce procédé réaliser des contrastes entre des parties d'aspect différent (par exemple un fond d'aspect brillant avec une gravure d'aspect mat, ou inversement). L'avantage de ce mode de réalisation est d'être parfaitement maîtrisable et reproductible. L'aspect satiné de certaines parties du moule peut être donné par plusieurs procédés, aboutissant tous à une rugosité dont l'écart moyen arithmétique Rₐ est de préférence compris entre 0,4 et 18 µm. Parmi les procédés possibles, on peut citer l'usinage direct par électroérosion, le sablage par abrasif de type corindon, billes de verre ou autre, la gravure chimique.

Selon un second mode de réalisation de l'invention, ladite surface extérieure hétérogène est obtenue par moulage d'une matière thermoplastique chargée (notamment avec du sulfate de baryum) dans un moule poli glacé. En effet, la demanderesse a découvert que, de façon particulièrement surprenante, certaines matières thermoplastiques chargées, telle qu'un polypropylène de densité 2 (polypropylène chargé avec du sulfate de baryum), donnait après moulage dans un moule glacé des différences importantes d'aspect de surface qui, après métallisation, conférait un effet saisissant de métal vieilli. A la différence du premier mode de réalisation, la répartition des zones mates et brillantes n'est pas maîtrisable et reproductible, mais peut-être cela contribue-t-il justement au réalisme accru de l'aspect "vieux métal" obtenu. L'effet est d'autant plus surprenant qu'on a décrit, dans le document JP 840142971, un effet contraire, celui d'augmenter le poli d'une surface par l'utilisation d'une charge dans le polypropylène.

## Revendications

1. Procédé pour donner un aspect métallique vieilli à une pièce moulée en matière thermoplastique, comportant les étapes d'évaporation directe de métal sur la surface extérieure de la pièce puis d'application d'une couche de vernis, **caractérisé en ce que**, préalablement aux deux dites étapes, on a rendu ladite surface extérieure hétérogène lors du moulage, avec des zones d'aspect bien poli et des zones d'aspect moins poli.

2. Procédé selon la revendication 1, **caractérisé en ce que** ladite surface extérieure hétérogène est obtenue lors du moulage par utilisation d'un moule dont la surface présente des zones bien polies et des zones moins polies.

3. Procédé selon la revendication 2, **caractérisé en ce que** les zones moins polies présentent un écart moyen arithmétique de rugosité Rₐ est de préférence compris entre 0,4 et 18 µm.

4. Procédé selon l'une quelconque des revendications 2 ou 3, **caractérisé en ce qu'**on utilise une matière thermoplastique non chargée, notamment un polypropylène non chargé.

5. Procédé selon la revendication 1, **caractérisé en ce que** ladite surface extérieure hétérogène est obtenue par moulage d'une matière thermoplastique chargée dans un moule poli.

6. Procédé selon la revendication 5, **caractérisé en ce que** la matière thermoplastique est un polypropylène de densité 2.

7. Procédé selon l'une quelconque des revendications 5 ou 6, **caractérisé en ce que** la charge de la matière thermoplastique est le sulfate de baryum.

## Patentansprüche

1. Verfahren, um einem aus thermoplastischem Material geformten Teil ein gealtertes metallisches Aussehen zu verleihen, mit den Schritten der direkten Verdampfung von Metall auf der äußeren Oberfläche des Teils, dann der Aufbringung einer Lackschicht, **dadurch gekennzeichnet, daß** man vor den zwei Schritten die äußere Oberfläche beim Formen mit Zonen mit sehr glattem Aussehen und Zonen mit weniger glattem Aussehen uneinheitlich gemacht hat.

2. Verfahren nach Anspruch 1, **dadurch gekennzeichnet, daß** die uneinheitliche äußere Oberfläche beim Formen durch Verwendung einer Form, deren Oberfläche sehr glatte Zonen und weniger glatte Zonen aufweist, erhalten wird.

3. Verfahren nach Anspruch 2, **dadurch gekennzeichnet, daß** die weniger glatten Zonen eine mittlere arithrnetische Rauheitsspanne Rₐ aufweisen, die vorzugsweise zwischen 0,4 und 18 µm liegt.

4. Verfahren nach einem der Ansprüche 2 oder 3, **dadurch gekennzeichnet, daß** man ein ungefülltes thermoplastisches Material, insbesondere ein ungefülltes Polypropylen verwendet.

5. Verfahren nach Anspruch 1, **dadurch gekennzeichnet, daß** die uneinheitliche äußere Oberfläche durch Formen eines gefüllten thermoplastischen Materials in einer glatten Form erhalten wird.

6. Verfahren nach Anspruch 5, **dadurch gekennzeichnet, daß** das thermoplastische Material ein Polypropylen mit der Dichte 2 ist.

7. Verfahren nach einem der Ansprüche 5 oder 6, **dadurch gekennzeichnet, daß** das Füllmaterial des thermoplastischen Materials Bariumsulfat ist.

## Claims

1. Process for giving a moulded part made of thermoplastic an aged metallic appearance, comprising the steps of evaporating metal directly onto the external surface of the part then of applying a layer of varnish, **characterized in that**, prior to the two said steps, the said external surface was made heterogeneous during moulding, with regions of well-polished appearance and regions of less-polished appearance.

2. Process according to Claim 1, **characterized in that** the said heterogeneous external surface is obtained during moulding by the use of a mould whose surface has well-polished regions and less-polished regions.

3. Process according to Claim 2, **characterized in that** the less-polished regions have an arithmetic mean roughness deviation Rₐ is of preferably between 0.4 and 18 µm.

4. Process according to either of Claims 2 and 3, **characterized in that** an unfilled thermoplastic, especially an unfilled polypropylene, is used.

5. Process according to Claim 1, **characterized in that** the said heterogeneous external surface is obtained by moulding a filled thermoplastic in a polished mould.

6. Process according to Claim 5, **characterized in that** the thermoplastic is a polypropylene of relative density 2.

7. Process according to either of Claims 5 and 6, **characterized in that** the filler in the thermoplastic is barium sulphate.
